**Europäisches Patentamt**

**European Patent Office**

**Office européen des brevets**

(11) Publication number: **0 064 398**
**B1**

(12) **EUROPEAN PATENT SPECIFICATION**

(45) Date of publication of patent specification: **09.11.88**

(21) Application number: **82302225.6**

(22) Date of filing: **29.04.82**

(51) Int. Cl.⁴: **F 16 L 1/04**

(54) Retrievable support system for launching of long pipelines.

(30) Priority: **30.04.81 US 258913**

(43) Date of publication of application:
**10.11.82 Bulletin 82/45**

(45) Publication of the grant of the patent:
**09.11.88 Bulletin 88/45**

(84) Designated Contracting States:
**FR GB NL**

(56) References cited:
**FR-A-2 344 678**
**GB-A- 904 714**

**PETROLEUM ENGINEER INTERNATIONAL, vol. 53, no. 2, February 1981, Dallas, Texas, USA, W.B. BLEAKLEY "Flow Line Gets Wheels for Ocean-Floor Tow", pp. 26,28,29,32,33,35**

(73) Proprietor: **Conoco Inc.**
**1000 South Pine Street P.O. Box 1267**
**Ponca City Oklahoma 74603 (US)**

(72) Inventor: **Bourne, Henry A., Jr.**
**911 East Overbrook**
**Ponca City Oklahoma 74601 (US)**

(74) Representative: **Leale, Robin George et al**
**FRANK B. DEHN & CO. Imperial House 15-19 Kingsway**
**London WC2B 6UZ (GB)**

Courier Press, Leamington Spa, England.

# Description

This invention relates generally to retrievable support systems for use in the launching of pipelines from an on-shore site into a body of water.

The construction of off-shore oil or gas production facilities often requires the placement of a long pipeline on or near the ocean floor, for example, to connect a satellite well to a central producing platform.

The most common way of manufacturing the pipelines and placing them on the ocean floor is to construct the pipeline on a lay barge and to lower the constructed pipeline from the lay barge onto the ocean floor as the pipeline is constructed.

In some situations, however, it is not possible to construct the pipeline on a lay barge and simultaneously lower it onto the ocean floor because of the severe environmental conditions present. This is often the case when production facilities are being constructed in the North Sea area. Also, some flowline bundles are too complex to construct on a lay barge.

It has been proposed that an entire pipeline be constructed at an on-shore construction site and subsequently be launched from the on-shore construction site and into a body of water and then towed through the body of water to the installation site.

Support systems have been proposed for supporting the pipeline at the on-shore site. These prior art support systems include a plurality of non-floatable ground engaging movable support means spaced along a length of the pipeline, and connected together by a support connecting line.

A problem encountered with these prior art support systems is that when they are released the sink to the floor of the body of water. This is particularly a problem where the floor is covered with large boulders and the like in which the support means hang up.

Petroleum Engineering International Vol. 53 No. 2 in an article entitled "Flow line gets wheel for ocean-floor tow" discloses a method of launching a pipe-line in which the suppport means are provided with floats and are thus retrievable when datached from the pipe-line. However, such a system still has the disadvantages that the pipeline and support means drag along can hang up on the sea floor as the pipe-line is towed out to sea. FR—AI—2,344,678 discloses the use of floats to support a submerged pipe-line section during transportation.

Viewed from one aspect the invention provides a method of launching a pipeline from an on-shore site into a body of water, such method comprising the steps of supporting said pipeline at said on-shore site with a plurality of ground engaging movable support means spaced along a length of said pipeline, said support means being interconnected by a support means connecting line and each having associated therewith buoyancy means, each support means supporting a portion of the total weight of the pipeline, the method further comprising connecting a launch vessel to the seaward end of said pipeline, moving said launch vessel seaward and thereby towing said pipeline into said body of water, and disengaging said support means from said pipeline, characterised by applying a retarding force to said pipeline and thereby maintaining a tension force in said pipeline as said pipeline is towed into said body of water, sufficient to hold said pipeline above a floor of said body of water after said ground-engaging support means have been disengaged from the pipeline.

In one embodiment the buoyancy of the buoyancy means associated with the support means is less than the combined weight of the support means and buoyancy means so that the support means will sink after being disengaged from the pipeline.

In a preferred embodiment, however, the buoyancy means associated with the support means comprises floats, one of said floats being attached to each of the support means and each of said floats having a buoyancy greater than the combined weight of the float plus the support means to which it is attached so that each support means will float after being disengaged from the pipeline.

The term "float" as used in the immediately preceding paragraph and in the claims is to be interpreted as meaning either a single float member (as in the preferred form of the invention described hereinafter with reference to the accompanying drawings) or a plurality of separate float members associated with each of said support means.

Thus the preferred support system comprises a float attached to each support means. This float has a buoyancy greater than a combined weight of the float plus the support means to which it is attached and less than a combined weight of the float plus the support means plus a portion of the total weight of the pipeline system supported by the support means. Thus, when the pipeline and floatable support means first enter the body of water, the support means initially continues to support part of the weight of the pipeline system and the floatable support means is submerged in the body of water. When the support means is disengaged from the pipeline system, however, the support means floats to the surface of the body of water and may be easily retrieved.

An embodiment of the invention will now be described by way of example and with reference to the accompanying drawings, in which:—

Figs. 1—5 comprise a sequential series of schematic plan drawings illustrating the method of the present invention.

Fig. 6 is a schematic elevation view of a pipeline being towed in a catenary fashion between a leading tow vessel and a trailing tow vessel.

Fig. 7 is a side elevation view of a pipeline system supported by a plurality of ground engaging movable support means.

Fig. 8 is a front elevation view of the system of Fig. 7 taken along line 8—8 of Fig. 7.

Fig. 9 is an exploded view of an alternative form of ground engaging support means which include a floatation means so that the support means will float once it is disengaged from the pipeline.

Fig. 10 is a graph describing the buoyancy of the system of Fig. 9 in relation to the depth of submergence of the float.

Fig. 11 is a schematic plan view illustrating several alternative methods of retrieving the floating support means of Fig. 9 after they are disengaged from the pipeline.

The apparatus of the present invention is particularly adapted for use with a pipeline system such as is disclosed in US—A—4474507, US—A—4377354 and 4363566, and for use with subsequent methods of towing such a pipeline as also disclosed in said specifications.

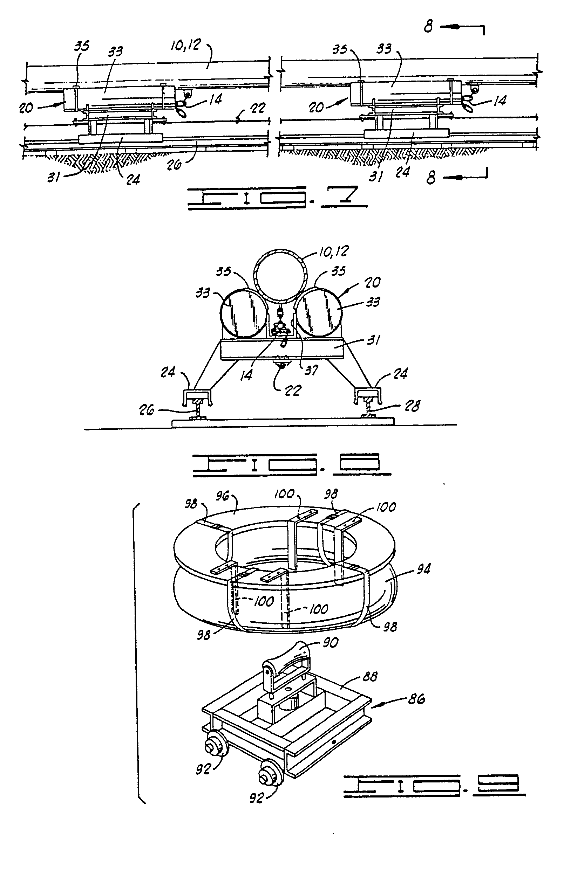

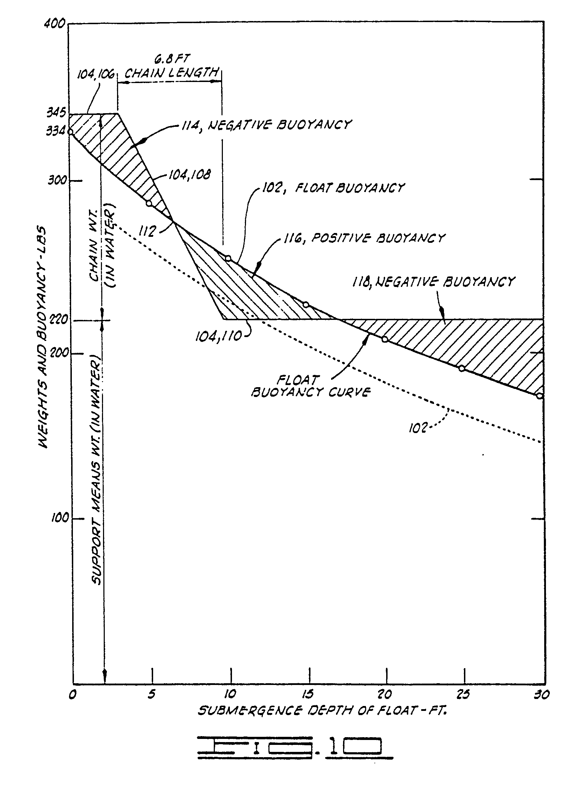

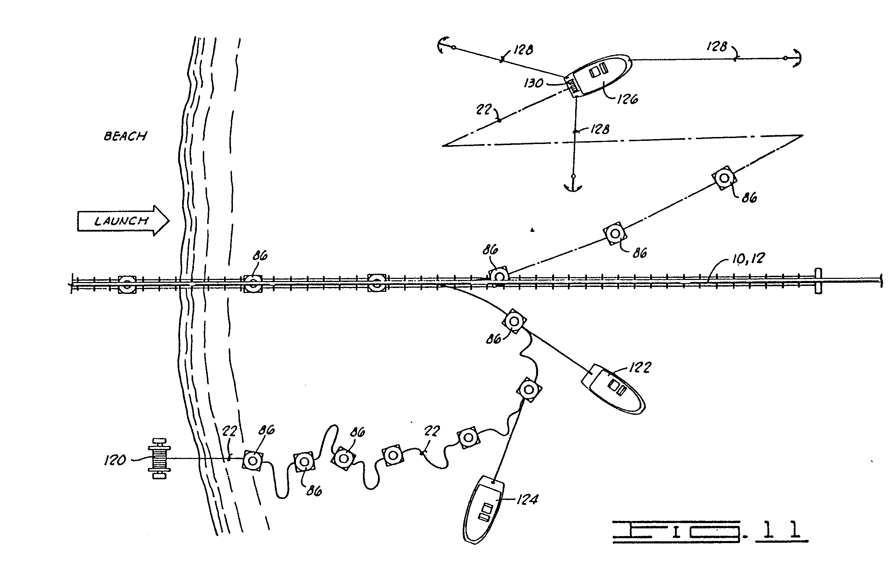

Referring now to Figs. 7 and 8, a pipeline system 10 includes a pipeline 12 having a plurality of chain weights 14 attached thereto. As can be seen in Fig. 6, the pipeline system 10 also includes a leading pipeline sled assembly 16 defining a seaward end of pipeline 12, and includes a trailing pipeline sled assembly 18 defining a landward end of pipeline 12. Pipeline system 10 is constructed in accordance with the teachings of the above U.S. Patent specifications. Pipeline 12 itself has a positive buoyancy. Chain weights 14 give the entire system 10 a negative buoyancy, so that in the absence of any lifting forces from outside sources pipe-line system 10 will assume a position with pipeline 12 floating off bottom and chain weights 14 engaging the bottom of body of water 30.

As shown in Figs. 7 and 8, the pipeline system 10 is supported at an on-shore construction site by a plurality of ground engaging support means 20 which are spaced along a length of the pipeline system 10. The support means 20 are connected together by a support connecting line 22 which may be a steel cable. The connecting line 22 may be a continuous cable being attached at intermediate points to the various support means 20, or it may be comprised of a plurality of cable segments having their ends attached to adjacent support means 20.

The support means 20 are movable relative to the ground surface so that when the pipeline system 10 is towed into the ocean, support means 20 will move with the pipeline system 10.

One manner of construction of the support means 20 is shown in Figs. 7 and 8, and includes a plurality of sleds having runners 24 slidably engaging a pair of parallel rails 26 and 28 extending into a body of water 30. Thus, sleds having runners engaging rails, which rails are mounted on the ground, may be generally referred to as ground engaging support means.

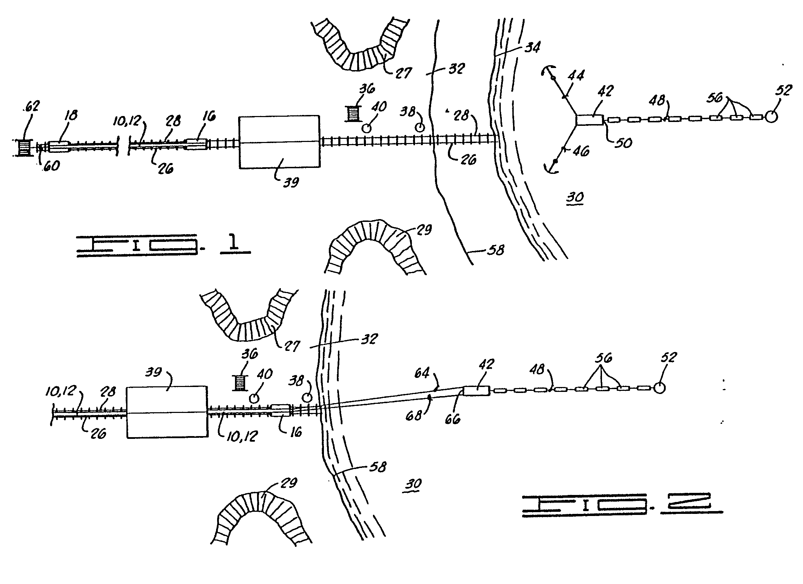

Referring now to the sequential series of Figs. 1—5, and beginning with Fig. 1, the method of launching the pipeline system is described below.

The support means 20 of Figs. 7 and 8 each include a frame 31 supported from runners 24.

Attached to frame 31 are a pair of spaced parallel cylindrical buoyancy tanks 33. The pipeline 12 rests on cushions 35 attached to the tanks 33, and the chain weights 14 are supported on a channel 37 attached to frame 31 between tanks 33. The tanks 33 have a buoyancy less than the weight of support means 20 including tanks 33, therefore support means 20 will not float when it is disengaged from pipeline system 10.

Fig. 1 illustrates a portion of an on-shore site 32. The rails 26 and 28 have their seaward ends extending into the body of water 30 to a point 34 defining the low tide mark of the body of water 30. Sand dunes 27 and 29 are shown.

The rails 26 and 28 extend landward through a construction facility 39 and then further landward for a distance of approximately one mile. The pipeline system 10 is constructed in the construction facility 39 and is stored on the rails 26 and 28 prior to launching.

Located near the rails 26 and 28 are an on-shore winch 36 and first and second turning blocks 38 and 40.

In Fig. 1, a shallow draft barge 42 has been positioned off-shore from the site 32 and is anchored by means of anchor lines 44 and 46. Barge 42 may also be referred to as an intermediate floating vessel 42.

A main launching line 48 is deployed seaward from a seaward end 50 of barge 42 to a main buoy 52.

The floor 54 (see Fig. 6) of body of water 30 is at such a shallow depth at the location of barge 42 that it would not be possible for a typical launch vessel to reach that location because there is insufficient draft to float the launch vessel. The main buoy 52 is located at a position in body of water 30 sufficient to allow a launch vessel to approach main buoy 52.

The main launching line 48 is provided with sufficient buoyancy means 56 to hold main launching line 48 above the floor 54 of body of water 30. It will be appreciated by those skilled in the art that the buoyancy means 50 may either be separate detachable elements attached to an otherwise non-buoyant line 48, or the line 48 may be constructed in such a manner and of such materials that the line 48 has an inherent buoyancy.

Also illustrated in Fig. 1 is the high tide mark 58 of body of water 30. The present invention is particularly adapted for launching the pipeline system 10 at high tide, and is adapted for launching at high speeds so that the entire launching procedure can be accomplished while the body of water 30 is at or substantially near its high tide mark 58.

A retarding line 60 is attached to the landward end 18 of pipeline system 10 and is also attached to the landward end of the support connecting line 22. Retarding line 60 is mounted upon a retarding winch 62.

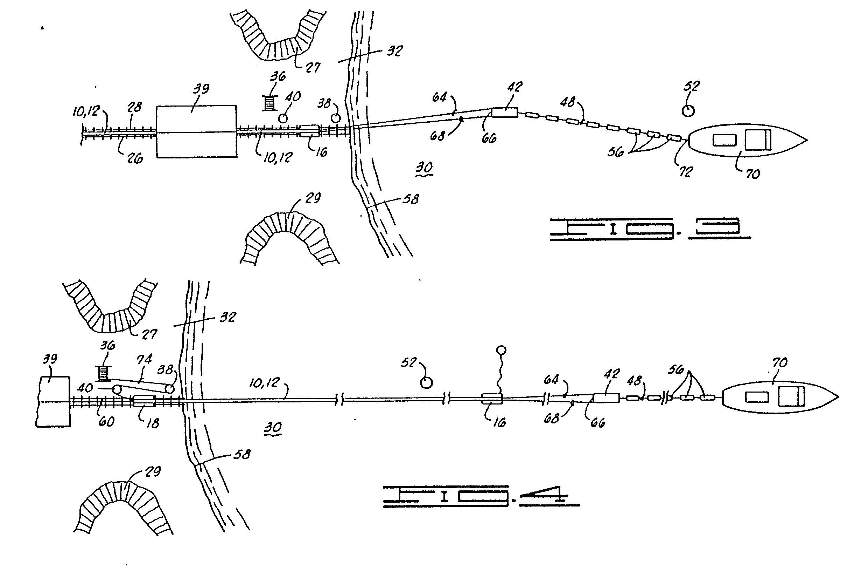

Referring now to Fig. 2, the pipeline system 10 has been moved seaward from the position shown in Fig. 1 to a position wherein the seaward end 16 is located near the high tide mark 58. This movement is preferably accomplished by use of the winch 36 and a pulling line (not shown) extended from winch 36 around turning block 38 and connected to seaward end 16 of pipeline system 10.

When the pipeline system 10 is in approximately the position shown in Fig. 2, a pipeline launch line 64 is connected between a landward end 66 of barge 42 and the seaward end 16 of pipeline system 10. A support means launch line 68 is similarly connected between barge 42 and a seaward end of support connecting line 22.

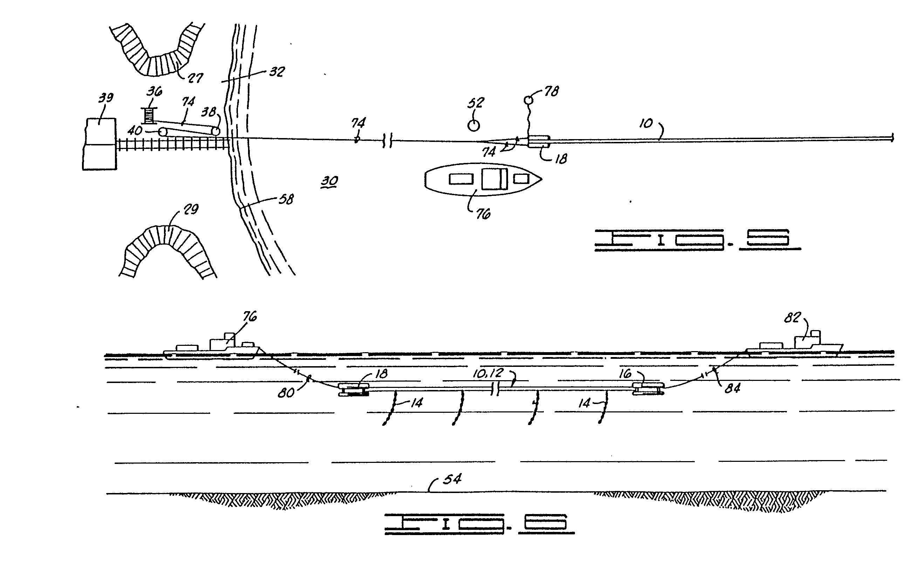

Referring now to Fig. 3, a launch vessel 70 approaches main buoy 52 and a seaward end 72 of main launching line 48 is disconnected from main buoy 52 and is connected to the launch vessel 70 as shown in Fig. 3. Next, as illustrated in Fig. 4, the launch vessel 70 moves seaward and thereby tows the pipeline system 10 and the support connecting line 22, with attached support means 20, into the body of water 30. In Fig. 4, only the pipeline system 10 is shown to simplify the illustration. The support connecting line 22 and support means 20 are generally still located below the pipeline system 10 and are submerged in the body of water 30. The support connecting line 22 is in tension since it is connected between the support launch line 68 and the retarding line 60.

As the pipeline system 10 and support connecting line 22 are towed into the body of water 30, a retarding force is applied to retarding line 60 by means of retarding winch 62 which retarding force is sufficient to maintain a tension on the pipeline system 10 sufficient to hold the pipeline system 10 above the floor 54 of body of water 30. Also the retarding line 60 and retarding winch 62 provide a braking system for controlling the high launching speed of pipeline system 10.

When the landward end 18 of pipeline system 10 reaches approximatly the position illustrated in Fig. 4 a polypropylene seagoing retarding line 74 is connected to the landward ends of both pipeline system 10 and support connecting line 22, and the first retarding line 60 is disconnected. The tensional force on pipeline system 10 and support connecting line 22 is maintained by seagoing retarding line 74.

Referring now to Fig. 5, the launch vessel 70 has continued to tow the pipeline system 10 into the body of water 30 until the landward end 18 of pipeline system 10 has reached a position in the body of water 30 wherein the body of water 30 has a depth sufficient to float a trailing tow vessel 76.

A pennant buoy 78 is then picked up by trailing tow vessel 76 and a trailing tow line 80 (see Fig. 6) is connected between the landward end 18 of pipeline system 10 and the trailing tow vessel 6.

Then, trailing tow vessel 76 applies a tensional retarding force to trailing tow line 80 to hold pipeline system 10 above the floor 54 of body of water 30, and the seagoing retarding line means 74 is disconnected from the pipeline system 10.

A leading tow vessel 82 is then connected to seaward end 16 of pipeline system 10 by a leading tow line 84 and the pipeline launch line 64 is then disconnected from the pipeline system 10. At that point, the pipeline system 10 has the appearance shown in Fig. 6 where it is suspended in a catenary fashion between leading tow vessel 82 and trailing tow vessel 76.

Fig. 9 illustrates an alternative manner of construction of the support means. The support means of Fig. 9 is designated by the numeral 86, and is a floating support means 86. The floating support means 86 includes a structural frame 88 having a saddle member 90 extending upwardly therefrom for engagement with pipeline 12. Attached to the frame 88 are a plurality of wheels 92 for engagement with the rails 26 and 28. It will be understood by those skilled in the art that skids or runners such as runners 22 could be substituted for the wheels 92.

Attached to the support means 86 is a float 94. The float 94 is preferably a toroidal shaped inflatable elastomeric member. The float 94 may be an innertube from a pneumatic tire or the like, and thus is relatively inexpensive.

The float 94 is attached to the frame 88 by an annular wooden support piece 96. Float 94 is attached to support piece 96 by a plurality of straps 98. The support piece 96 is itself attached to frame 88 by a plurality of brackets 100 the lower ends of which are welded to frame 88 and the upper ends of which are bolted to wooden support piece 96. As can be seen in Fig. 9, the toroidal float 94 fits around the saddle member 90.

Referring again to Figs. 7 and 8, it is seen that each of the support means thereshown, supports a portion of the weight of the pipeline 12 and also supports one of the chain weights 14 which is piled up on top of the support means 20. Similarly, the chain weight 14 is layed on top of the wooden support piece 96 of support means 86.

Each of the floats 94 has a buoyancy greater than a combined weight of the float 94 plus the support means 86 to which it is attached, and less than a combined weight of the float 94, plus the support means 86 to which it is attached, plus the portion of the total weight of pipeline system 10 supported by the support means 86, so that when the portion of the total weight of pipeline system 10 carried initially by support means 86 is removed from the support means 86, the support means 86 will float to the surface of body of water 30.

As can be understood by viewing Figs. 7 and 8, once the pipeline system 10 is in the body of water 30, the support means 86 will begin to submerge. As soon as support means 86 has moved slightly downward away from the pipeline 12, the only portion of pipeline system 10 then being supported by the support means 86 will be the weight of chain weight 14. As the depth of submergence of support means 86 below pipeline 12 increases, the portion of chain weight 14 being supported by the support means 86 will also decrease.

Thus, the float 94 preferably has a buoyancy less than a combined weight of the float 94, plus the support means 86, plus the chain weight 14, so that so long as the support means 86 is supporting a substantial portion of the chain weight 14, the support means 86 will be held under water.

When using an inflatable elastomeric float like the float 94, the overall design of the system must take into account the fact that as the inflatable elastomeric float 94 is submerged to deeper depths within the body of water, the external pressures acting upon the inflatable float increase thus decreasing the volume of water displaced by the float and thus decreasing the buoyancy of the float. For any given inflatable elastomeric float attached to a support means having a fixed submerged weight, it is possible to submerge the assembled float and support means to a depth such that the buoyancy of the float is decreased to a value less than the total weight of the float and the support means, so that the float is no longer capable of buoying the support means and at that point the entire assembly will sink to the bottom of the body of water. Thus, the design of the system must be such that the float 94 will not be submerged to this critical depth during the process of launching the pipeline.

An example of such a design is illustrated in Fig. 10, which is a graph plotting the weight supported by float 94, and the buoyancy of the float 94, as a function of the depth to which the float is submerged.

In Fig. 10, the horizontal axis represents the submergence depth of the float 94 and the vertical axis is scaled in pounds and both weight and buoyancy are plotted on the vertical axis.

The curve 102 on Fig. 10 represents the buoyancy of float 94 as a function of depth of submergence. The position of curve 102 may be moved, for example to the position shown in dotted lines, by varying the inflation pressure of float 94. It can be seen that for the particular example plotted in Fig. 10, the buoyancy of the float at the surface is equal to 334 pounds (151.5 Kg). A second curve 104 of Fig. 10 is a plot of the total of the weight of the support means 86, the float 94, and the portion of weight chain 14, if any, supported by support means 86 for a given submergence depth of float 94.

For a pipeline system 10 like that disclsoed in the present application, the chain weight 14 has a length of 6.8 feet (2.07 m) and a weight of about 18.4 pounds per foot (27.4 Kg per metre) in salt water, so that the chain weight 14 has a total weight of approximately 125 pounds (56.7 Kg). The combined weights of the support means 86 and the float 94 attached thereto is approximately 220 pounds (99.7 Kg). It will be understood that in the embodiment disclosed herein the weight of the float 94 itself is negligible so it can be said that the support means 86 weighs approximately 220 pounds (99.7 Kg). It is, however, possible that other types of float means might be attached to the support means 86 wherein the float itself would have a substantial weight, so it will be understood that in order for the float to support the entire apparatus to which it is attached after it is disengaged from the pipeline system 10, the float must have a buoyancy sufficent to overcome the weight of the support means and any weight of the float itself.

The combined weight of the support means 86 and the chain weight 14 is thus approximately 345 pounds (156 Kg) as is represented by the left-most end of second curve 104.

It can be observed for a pipeline system 10 like that disclosed in the present application, that the pipeline 12 will float off the support means 86 when the float 94 is submerged to a depth of approximately three feet (.914 m). Thus, the left-hand flat portion 106 of second curve 104 represents the first three feet (.914 m) of submergence of float 94 wherein the support means 86 still is supporting the entire 345 pound (156 Kg) combined weight of chain 14 plus the support means 86. From a submergence depth of three feet (.914 m) to a submergence depth of 9.8 feet (2.98 m), the support means 86 will support a linearly decreasing portion of the weight of chain weight 14. Thus, the combined weight of the support means 86 plus the portion of the weight of chain weight 14 being supported thereby for depths of submergence between three feet (.914 m) and 9.8 feet (2.98 m) is represented by the downwardly sloped portion 108 of curve 104.

At any submergence depth of greater than 9.8 feet (2.98 m) the chain weight 14 is no longer supported by the support means 86 so that the right-hand horizontal portion 110 of second curve 104 represents the weight of support means 86 of 220 pounds (99.7 Kg).

It can be seen in Fig. 10 that the second curve 104 first crosses the first curve 102 at a point 112 representing a submergence depth of approximately 7 feet (2.13 m) for the float 94. Thus, at a submergence depth of 7 feet (2.13 m), the buoyancy of float 94 is equal to the weight of support means plus the portion of the weight of chain weight 14 being supported thereby, and the support means 86 will thus not sink any further. At this depth of about 7 feet (2.13 m) any sideways thrust exerted on the float 94 will cause it to move sideways from under the chain weight 14 and the float 94, thus disengaging pipeline system 10, and support means 86 will pop to the surface of the body of water 30. It will be understood that some of the support means 86 may disengage themselves from pipeline system 10 before the entire pipeline 12 is towed into the body of water 30.

Thus, it is seen that it is important that the overall system design be such that the float 94 will never be submerged to a depth below the depth at which its buoyancy is greater than the weight of the support means. In the example shown in Fig. 10 this means that the float 94 should be never be submerged to a depth greater than approximately 17 feet (5.18 m) for if it is, then it will continue to sink due to decreasing buoyancy.

The summation of the forces acting upon the support means 86 due to its weight, supported weight, and buoyancy of float 94, may generally be described by looking at the relationship between the two curves 102 and 104. At the left-hand side of Fig. 10, the second curve 104 is above the first curve 102 thus representing the sinking of float 94 from a depth of zero feet to a depth of approximately 7 feet (2.13 m). This is a zone 114 of negative buoyancy wherein the weight exerted downward is greater than the upward buoyant force. At depths of submergence for float 94 between approximately 7 feet (2.13 m) and 17 feet (5.18 m), the float 94 has a buoyancy greater than the weight being supported by support means 86 and thus there is a zone 116 of positive buoyancy. For depths of submergence greater than 17 feet (5.18 m), the buoyancy once again becomes less than the weight which is exerted downward upon support means 86 thus there is a second zone 118 of negative buoyancy.

Preferably the entire system is designed such that the chain weight 14 has a length such that when pipeline 12 is located substantially at the surface of body of water 30 and the chain weight 14 is extended downward substantially its entire length with the support means 86 located below and engaging the lower end of the chain weight, the float 94 attached to support means 86 has a buoyancy greater than the combined weight of the float 94 and the support means 86. This eliminates any possibility of the float 94 being submerged into the second negative buoyancy zone 118.

Referring now to Fig. 11, several methods are there schematically illustrated for retrieving the floating support means 86 after the pipeline system 10 has been launched.

As previously described, one of the final steps in the launching of the pipeline system 10 is the disconnection of pipeline launch line 64 from the seaward end of pipeline system 10. At the same time the support means launch line 68 is disconnected from support connecting line 22. If a non-floating type of support means such as support means 20 is utilized, then when it is disconnected from barge 42, the support connecting line 22 and all of the attached support means 20 will sink to the ocean floor. If, however, floating support means such as support means 86 are utilized, then the support connecting line 22 and all of the support means 86 will float to the surface of the body of water 30.

The floating support means 86 and support connecting line 22 may then be retrieved in any one of several manners. Fig. 11 simultaneously illustrates these various methods. A first manner of retrieving the floating support means 86 is to connect the support connecting line 22 to a retrieving winch 120 located on shore. Then the support connecting line 22 may be reeled into shore by the winch 120 thus also pulling the floating support means 86 onto shore.

A second method of retrieving the floating support means 86 is to connect small boats, such as boats 122 and 124, to the support connecting line 22 and the floating support means 86 and to tow the support connecting line 22 and floating support means 86 to shore.

A third method of retrieving is illustrated on the upper portion of Fig. 11 wherein a boat 126 is anchored in the body of water 30 by anchor lines 128 and the support connecting line 22 is connected to a retrieving winch 130 on the boat 126. Then the support connecting line 22 is reeled into the boat 126 by means of winch 130 thus pulling the support connecting line 22 and floating support means 86 into the boat 126.

## Claims

1. A method of launching a pipeline (12) from an on-shore site (32) into a body of water (30), such method comprising the steps of supporting said pipeline (12) at said on-shore site with a plurality of ground engaging movable support means (86) spaced along a length of said pipeline, said support means being interconnected by a support means connecting line and each having associated therewith buoyancy means, each support means supporting a portion of the total weight of the pipeline, the method further comprising connecting a launch vessel (70) to the seaward end (16) of said pipeline (12), moving said launch vessel (70) seaward and thereby towing said pipeline into said body of water, and disengaging said support means (86) from said pipeline, characterized by applying a retarding force to said pipeline (12) and thereby maintaining a tension force in said pipeline as said pipeline is towed into said body of water, sufficient to hold said pipeline above a floor (54) of said body of water (30) after said ground-engaging support means have been disengaged from the pipeline.

2. A method as claimed in claim 1, wherein said support means comprise a plurality of sleds having runners (24) slidably engaging a pair of parallel rails (26, 28) extending into said body of water (30).

3. A method as claimed in claim 1 or 2 wherein a retarding line (60; 74) is connected to a landward end of said pipeline (12) before said landward end (18) of said pipeline enters said body of water, and a retarding force is applied to said retarding line (60; 74) thereby maintaining said tension force in said pipeline.

4. A method as claimed in claim 1, 2 or 3 further comprising connecting a main launching line (48) between said launch vessel (70) and said seaward end (16) of said pipeline (12), and providing sufficient buoyancy means (56) attached to said main launching line (48) to hold said main launching line (48) above said floor (54) of said body of water.

5. A method as claimed in claim 4, further comprising positioning an intermediate floating vessel (42) off-shore from said site (32), deploying said main launching line (48) seaward from a seaward end (50) of said intermediate floating vessel (42), connecting a seaward end (72) of said main launching line to said launch vessel (70), and connecting a pipeline launch line (64) between a landward end (66) of said intermediate floating vessel (42) and said seaward end (16) of said pipeline (12).

6. A method as claimed in any preceding claim wherein the buoyancy of the buoyancy means associted with the support means is less than the combined weight of the support means and buoyancy means so that the support means will sink after being disengaged from the pipeline.

7. A method as claimed in any of claims 1 to 5 wherein the buoyancy means associated with the support means comprises floats (94), one of said floats being attached to each of the support means (86) and each of said floats (94) having a buoyancy greater than the combined weight of the float plus the support means (86) to which it is attached so that each support means will float after being disengaged from the pipeline.

8. A method as claimed in claims 5 and 7 further comprising connecting a support means launch line (68) between said landward end (66) of said intermediate floating vessel (42) and said seaward end of said support connecting line (22).

9. A method as claimed in claim 8 further comprising connecting a leading tow line (84) between a leading tow vessel (82) and said seaward end (16) of said pipeline (12) after said pipeline has been towed into said body of water, and thereafter disconnecting said pipeline launch line (64) from said pipeline.

10. A method as claimed in claim 7, 8 or 9 further comprising the step of retrieving said floating support means (86).

11. A method as claimed in claim 10 wherein said retrieving step includes the steps of connecting said support connecting line (22) to an on-shore winch (120) and reeling said support connecting line (22) and said floating support means (86) in to shore.

12. A method as claimed in claim 10, wherein said retrieving step includes the steps of connecting said support connecting line (22) and support means (86) to a boat (122; 124) and towing said support connecting line and said floating support means to shore.

13. A method as claimed in claim 10, wherein said retrieving step includes the steps of connecting said support connecting line (22) to a winch (130) mounted on a boat (126) and reeling said support connecting line and said floating support means in to said boat.

14. A method as claimed in any preceding claim further comprising connecting a trailing tow line (80) between a trailing tow vessel (76) and a landward end (18) of said pipeline (12) after said landward end (18) of said pipeline has been towed into said body of water, whereby a tensional retarding force is applied to said pipeline by means of said trailing two vessel (76) to hold said pipeline (12) above said floor (54) of said body of water (30).

15. A method as claimed in any preceding claim wherein said step of moving said launch vessel seaward involves moving said launch vessel seaward, when said body of water is at substantially its high tide mark, at such speed that the entire launching procedure is accomplished whilst said body of water is at substantially its high tide mark.

**Patentansprüche**

1. Verfahren zum Verlegen einer Pipeline (12) von einer an Land befindlichen Stelle (32) ins Wasser (30), welches Verfahren die Schritte aufweist, bei denen die Pipeline (12) auf der an Land befindlichen Stelle mit einer Merhzahl von mit dem Untergrund in Eingriff befindlichen beweglichen Stützeinrichtungen (86) gestützt wird, die in Längsrichtung der Pipeline im Abstand angeordnet sind, wobei die Stützeinrichtungen durch ein Stützeinrichtungsverbindungsseil untereinander verbunden sind und die jeweils zugeordnete Schwimmeinrichtungen haben, wobei jede Stützeinrichtung einen Teil des Gesamtgewichts der Pipeline trägt, welches Verfahren ferner aufweist, daß ein Verlegungsschiff (70) mit dem wasserseitigen Ende (16) der Pipeline (12) verbunden wird, das Verlegungsschiff (70) ins Wasser bewegt und hierdurch die Pipeline in das Wasser geschleppt wird, und die Stützeinrichtung (86) von der Pipeline gelöst wird, dadurch gekennzeichnet, daß eine Bremskraft auf die Pipeline (12) ausgeübt und hierdurch die Zugkraft in der Pipeline beim Schleppen der Pipeline in das Wasser so ausreichend aufrechterhalten wird, daß die Pipeline über einem Boden (54) des Wassers (30) gehalten ist, nachdem die mit dem Untergrund in Eingriff befindlichen Stützeinrichtungen von der Pipeline getrennt sind.

2. Verfahren nach Anspruch 1, bei dem die Stützeinrichtung eine Mehrzahl von Schlitten aufweist, die Laufteile (24) haben, die gleichbeweglich mit einem Paar paralleler Schienen (26, 28) zusammenarbeiten, die ins Wasser (30) verlaufen.

3. Verfahren nach Anspruch 1 oder 2, bei dem ein Bremsseil (60; 74) mit einem landseitigen Ende der Pipeline (12) verbunden wird, bevor das landseitige Ende (18) der Pipeline ins Wasser eintritt, und bei dem eine Bremskraft auf das Bremsseil (60; 74) ausgeübt wird, um hierdurch die Zugkraft in der Pipeline aufrechtzuerhalten.

4. Verfahren nach Anspruch 1, 2 oder 3, das ferner aufweist, daß ein Hauptverlegungsseil (48) als Zwischenverbindung zwischen dem Verlergungsschiff (70) und dem wasserseitigen Ende (16) der Pipeline (12) vorgesehen wird und ausreichend Schwimmeinrichtungen (56) vorgesehen werden, die an dem Hauptverlegungsseil (48) vorgesehen sind, um das Hauptverlegungsseil (48) über dem Boden (54) des Wassers zu halten.

5. Vefahren nach Anspruch 4, das ferner aufweist, daß ein dazwischenliegendes, schwimmendes Wasserfahrzeug (42) von der Stelle (32) wassereinwärts entfernt positioniert wird, das Hauptverlegungsseil (48) wasserseitig von einem wasserseitigen Ende (50) des dazwischen angeordneten, schwimmenden Wasserfahrzeugs (42) entfaltet wird, ein wasserseitiges Ende (72) des Hauptverlegungsseiles mit dem Verlegungsschiff (70) verbunden wird, und ein Pipelineverlegungsseil (65) als Zwischenverbindung zwischen einem landseitigen Ende (66) des dazwischenliegenden, schwimmenden Wasserfahrzeugs (42) und dem wasserseitigen Ende (16) der Pipeline (12) vorgesehen wird.

6. Verfahren nach einem der vorangehenden Ansprüche, bei dem der Auftrieb der Schwimmeinrichtungen, die den Stützeinrichtungen zugeordnet sind, geringer als die Kombination aus dem Gewicht der Stützeinrichtung und der Schwimmeinrichtung ist, so daß die Stützeinrichtungen nach dem Lösen von der Pipeline sinken.

7. Verfahren nach einem der Ansprüche 1 bis 5, bei dem die Schwimmeinrichtungen, die den Stützeinrichtungen zugeordnet sind, Schwimmkörper (94) aufweisen, von denen einer an der jeweiligen Stützeinrichtung (86) angebracht ist, und bei dem jeder Schwimmkörper (94) einen Auftrieb hat, der größer als die Kombination aus dem Gewicht des Schwimmkörpers plus der Stützeinrichtung (86) ist, an der dieser angebracht ist, so daß jede Stützeinrichtung schwimmt, nachdem sie von der Pipeline freikommt.

8. Verfahren nach Anspruch 5 und 7, das ferner aufweist, daß ein Stützeinrichtungsverlegungsseil (78) als Zwischenverbindung zwischen dem landseitigen Ende (66) des dazwischen angeordneten, schwimmenden Wasserfahrzeugs (42) und dem wasserseitigen Ende des Stützverbindungsseiles (22) vorgesehen wird.

9. Verfahren nach Anspruch 8, das ferner aufweist, daß ein vorderes Schleppseil (84) als eine Zwischenverbindung zwischen einem vorderen Schleppschiff (82) und dem wasserseitigen Ende (16) der Pipeline (12) vorgesehen wird, nachdem die Pipeline in das Wasser geschleppt wurde, und daß anschließend das Pipelineverlegungssteil (84) von der Pipeline gelöst wird.

10. Verfahren nach Anspruch 7, 8 oder 9, das ferner den Schritt aufweist, gemäß dem die schwimmenden Stützeinrichtungen (86) wieder aufgenommen werden.

11. Verfahren nach Anspruch 10, bei dem der Schritt zum Wiederaufnehmen die Schritte umfaßt, gemäß denen das Stützverbindungsseil (22) mit einer an Land befindlichen Winde (120) verbunden wird und das Stützverbindungsseil (22) und die schwimmenden Stützeinrichtungen (86) an Land gezogen werden.

12. Verfahren nach Anspruch 10, bei dem der Schritt zur Wiederaufnahme die Schritte enthält, gemäß denen das Stützverbindungsseil (22) und die Stützeinrichtungen (86) mit einem Wasserfahrzeug (122; 124) verbunden werden und das Stützverbindungsseil und die schwimmenden Stützeinrichtungen an Land geschleppt werden.

13. Verfahren nach Anspruch 10, bei dem der Schritt zur Wiederaufnahme die Schritte enthält, gemäß denen das Stützverbindungsseil (22) mit einer Winde (130) verbunden wird, die an einem Schiff (126) angebracht ist und das Stützverbindungsseil und die schwimmenden Stützeinrichtungen zum Schiff gezogen werden.

14. Verfahren nach einem der vorangehenden Ansprüche, das ferner aufweist, daß ein hinteres Schleppseil (80) als Zwischenverbindung zwischen einem hinteren Schleppschiff (76) und einem landseitigen Ende (18) in dem Ende (18) der Pipeline (12) vorgesehen wird, nachdem das landseitige Ende (18) der Pipeline in das Wasser geschleppt wurde, wobei eine Zugbremskraft auf die Pipeline mit Hilfe des hinteren Schleppschiffs (76) aufgebracht wird, um die Pipeline (12) über dem Boden (74) des Wassers (30) zu halten.

15. Verfahren nach einem der vorangehenden Ansprüche, bei dem der Schritt zum Bewegen des Verlegungsschiffes ins Wasser miteinschließt, daß das Verlegungsschiff mit einer solchen Geschwindigkeit ins Wasser bewegt wird, wenn das Wasser im wesentlichen einen hohen Wasserstand hat, daß der gesamte Verlegungsablauf während des im wesentlichen hohen Wasserstandes des Wassers beendet wird.

**Revendications**

1. Procédé de lancement d'une canalisation (12) depuis un site à terre (32) dans une masse d'eau (30), ce procédé comprenant des étapes de support de la canalisation (12) au site à terre à l'aide de plusieurs dispositifs mobiles (86) de support destinés à être au contact du sol et espacés le long de la canalisation, les dispositifs de support étant raccordés par un câble de raccordement et ayant chacun un dispositif associé de flottabilité, chaque dispositif de support portant une partie du poids total de la canalisation, le procédé comprenant en outre le raccordement d'un bâtiment de lancement (70) à l'extrémité (16) de la canalisation (12) qui est tournée vers la mer, le déplacement du bâtiment de lancement (70) ver la mer et de cette manière le remorquage de la canalisation dans la masse d'eau, et la séparation des dispositifs (86) de support de la canalisation, caractérisé par l'application d'une force retardatrice à la canalisation (12) et ainsi le maintien d'une force de traction dans la canalisation lorsque celle-ci est remorquée dans la masse d'eau, la force étant suffisante pour que la canalisation soit maintenue au-dessus du fond (54) de la masse d'eau (30) après que les dispositifs de support destinés à être au contact du sol se sont séparés de la canalisation.

2. Procédé selon la revendication 1, dans lequel les dispositifs de support comportent plusieurs traineaux ayant des patins (24) destinés à glisser sur deux rails parallèles (26, 28) pénétrant dans la masse d'eau (30).

3. Procédé selon la revendication 1 ou 2, dans lequel un câble retardateur (60; 74) est raccordé à l'extremité de a canalisation (12) qui est tournée vers la terre avant que l'extrémité (18) de la canalisation qui est tournée vers la terre ne pénètre dans la masse d'eau, et une force retardrice est appliquée au câble retardateur (60; 74) afin que la force de tension soit maintenue dans la canalisation.

4. Procédé selon l'une des revendications 1, 2 et 3, comprenant en outre le raccordement d'un câble principal (48) de lancement entre le bâtiment de lancement (70) et l'extrémité (16) de la canalisation (12) qui est tournée vers la mer, et l'utilisation d'un dispositif (56) fixé au câble principal (48) de lancement et ayant une flottabilité suffisante pour que le câble principal (48) de lancement soit maintenu au-dessus du fond (54) de la masse d'eau.

5. Procédé selon la revendication 4, comprenant en outre la disposition d'un bâtiment flottant intermédiaire (42) à distance de la côte dudit site (32), le déploiement du câble principal (48) de lancement du côté de la mer à partir d'une extrémité (50) du bâtiment intermédiaire flottant (42) qui est tournée vers la mer, le raccordement d'une extrémité (72) du câble principal de lancement qui est tournée vers la mer au bâtiment de lancement (70), et le raccordement d'un câble (64) de lancement de canalisation entre une extrémité (66) du bâtiment intermédiaire flottant (42) qui est tournée vers la terre et l'extrémité (16) de la canalisation (12) qui est tournée vers la mer.

6. Procédé selon l'une quelconque des revendications précédentes, das lequel la flottabilité du dispositif de flottabilité associé au dispositif de support est inférieure au poids combiné du dispositif de support et du dispositif de flottabilité afin que le dispositif de support s'enfonce lorsqu'il a été séparé de la canalisation.

7. Procédé selon l'une quelconque des revendications 1 à 5, dans lequel le dispositif de flottabilité associée au dispositif de support comporte des flotteurs (94), un flotteur étant fixé à chaque dispositif de support (86), et chaque flotteur (94) ayant une flottabilité supérieure au poids combiné du flotteur et du dispositif de support (86) auquel il est fixé si bien que chaque dispositif de support flotte lorsqu'il a été séparé de la canalisation.

8. Procédé selon les revendications 5 et 7, comprenant en outre le raccordement d'un câble (68) de lancement de dispositifs de support entre l'extrémité (66) du bâtiment intermédiaire flottant (42) qui est tournée vers la terre et l'extrémité du câble (22) de raccordement de support qui est tournée vers la mer.

9. Procédé selon la revendication 8, comprenant en outre le raccordement d'un câble antérieur (84) de remorquage entre un bâtiment antérieur (82) de remorquage et l'extrémité (16) de la canalisation (12) qui est tournée vers la mer après que la canalisation a été remorquée dans la masse d'eau, puis la déconnexion du câble (64) de lancement de canalisation de cette dernière.

10. Procédé selon l'une des revendications 7, 8 ou 9, comprenant en outre l'étape de récupération des dispositifs flottants (86) de support.

11. Procédé selon la revendication 10, dans lequel l'étape de récupération comprend les étapes de raccordement du câble (22) de raccordement des supports à un treuil (120) placé à terre et l'enroulement du câble (22) de raccordement des supports et des dispositifs flottants (86) de support à terre.

12. Procédé selon la revendication 10, dans lequel l'étape de récupération comprend les étapes de raccordement du câble (22) de raccordement des supports et des dispositifs de support (86) à un bateau (122; 124) et le remorquage du câble de raccordement et des dispositifs flottants de support vers le rivage.

13. Procédé selon la revendication 10, dans lequel l'étape de récupération comprend les étapes de raccordement du câble (22) de raccordement des supports à un treuil (130) monté sur un bateau (126) et l'enroulement du câble de raccordment des supports et des dispositifs flottants de support dans le bateau.

14. Procédé selon l'une quelconque des revendications précédentes, comprenant en outre le raccordement d'un câble postérieur (80) de remorquage entre un bâtiment postérieur (76) de remorquage et une extrémité (18) de la canalisation (12) qui est tournée vers la terre après que l'extrémité (18) de la canalisation qui est tournée vers la terre a été remorquée dans la masse d'eau, si bien qu'une force retardrice de tension est appliquée à la canalisation par le bâtiment postérieur (76) de remorquage afin que la canalisation (12) soit maintenue au-dessus du fond (54) de la masse d'eau (30).

15. Procédé selon l'une quelconque des revendications précédentes, dans lequel l'étape de déplacement du bâtiment de lancement vers la mer comprend le déplacement vers la mer du bâtiment de lancement lorsque la masse d'eau est pratiquement à marée haute, avec une vitesse telle que la totalité de la procédure de lancement est réalisée pendant que la masse d'eau est pratiquement à marée haute.

FIG. 1

FIG. 2

FIG. 3

FIG. 4

ठ

FIG.5

FIG.6

FIG. 7

FIG. 8

FIG. 9

4

FIG. 10

BEACH

LAUNCH

128

128

130

126

22

128

86

86

86

86

10,12

86

86

86

86

122

120

22

86

22

86

124

86

FIG. 11

0 064 398